# EUROPEAN PATENT SPECIFICATION

(11) **EP 1 551 262 B1**
(45) Date of publication and mention of the grant of the patent: **05.07.2006**
(21) Application number: 03756446.5
(22) Date of filing: 09.10.2003
(51) Int. Cl.: A47J 31/04

(54) **ADJUSTABLE ASCENSION PIPE**
EINSTELLBARES STEIGROHR
COLONNE MONTANTE REGLABLE

(30) Priority: 09.10.2002 DK 200201516
(43) Date of publication of application: 13.07.2005
(73) Proprietor: PI-DESIGN AG, 6234 Triengen (CH)
(72) Inventor: JORGENSEN, Carsten, CH-6005 St. Niklausen/LU (CH)
(74) Representative: Stellinger, Jens-Holger
(86) International application number: PCT/DK2003/000677
(87) International publication number: WO 2004/041038

(56) References cited:
- GB-A- 636 757
- GB-A- 1 435 554
- US-A- 3 426 670
- US-A- 5 471 910

## Description

### Technical Field

The invention relates to an adjustable riser pipe in a device for brewing coffee, tea or the like liquids and as indicated in the preamble of claim 1.

The device includes two containers sealingly arranged relative to and above one another, said two containers being flow-connected through the adjustable riser pipe in such a manner that liquid water can be caused to leave the closed lower container and enter the upper container through said riser pipe by means of pressure resulting from a heating until the rising of liquid water is stopped because the water level reaches a limit level defined by a level set by the lower edge of the riser pipe, optionally according to a set of marking points.

As the general operating principle of such a device is well-known to the person skilled in the art, no further explanation is included in the present description.

### Background Art

EP-A1-0.292.649 discloses a device of the above type and including an adjustable riser pipe. Here the riser pipe is shaped as a rigid, cylindrical, straightly cut, centrally and vertically arranged length of pipe. In the assembled and ready-to-use state of the device, the riser pipe extends from the adjustable limit level in the lower container and almost to the top of the upper container. A pipe nose is integrated in the bottom of the upper container and extends from the bottom and far upwards into the upper portion of the upper container. The pipe nose is integrated in the bottom of the upper container by the long bore of said pipe nose acting with a narrow clearance as an axial guide in particular for the riser pipe, while the upper free edge of the pipe nose can operate as a visible reference point for a substantially axially extending set of setting points along the upper portion of the riser pipe. A gasket in form of a resilient ring is arranged from the inner face of the pipe nose bore and squeezes in a sealing and retaining manner about the riser pipe.

This device is encumbered with considerable draw-backs for the user of the device because after a short-time use the setting of the riser pipe by means of an altered displacement position relative to the pipe nose has the effect that significant stick-slip-phenomena appear at the gasket. In addition, blocking additions/deposits of for instance lime resulting/precipitated from the water can in particular arise in the narrow long clearance between the pipe nose and the riser pipe below the gasket due to the drastic alteration of the flow cross section immediately above the upper free edge of the pipe nose. The problems manifest themselves to the user in form of a drastically increased demand for a force necessary for the setting through the axial displacement of the riser pipe. Accordingly, it is necessary to use both hands for the setting which involves a difficult, symmetrical grip about the upper portion and a pressing downwards of the riser pipe by means of both thumbs. Therefore it is very difficult in practice to ensure an accurate adjustment of the riser pipe due to the "chattering" nature of the adjustment movement and despite the provided scale. Furthermore, the adjustment is blurred by the thickness of the layer of lime which is deposited on the reference face on top of the pipe nose and which is difficult to remove. In addition, the gasket is easily damaged during the violent handling and consequently it is no longer as efficient as previously both with respect to operating as a seal and as the member retaining the riser pipe in the set position.

### Disclosure of Invention

Therefore, the object of the invention is to provide an adjustable riser pipe which is significantly improved compared to the hitherto known adjustable riser pipe for the present type of device, and which in particular remedies the problems and draw-backs described above.

This object is accomplished by means of the adjustable riser pipe according to the invention, which is characterised in that the riser pipe is formed by a main pipe and a sleeve being substantially sealingly and axially and/or circumferentially displaceable about said main pipe,
- that the main pipe fixedly and tightly abuts a structure in the upper container,
- that the main pipe includes a lower edge at an unchangeable distance and direction from a fixed reference point on the upper container,
- that the adjustable length of the riser pipe and consequently the set limit for the rising liquid water from the lower container during the brewing procedure are defined by the instantaneous maximum level of the lower edge of the sleeve.

As a result the setting has been considerably facilitated because the user can hold about the main pipe for instance by means of merely one hand while fine setting the sleeve on the main pipe by means of the thumb and the index finger in a well controlled manner without a stick-slip-effect caused by additional gasket members. Thus, when the device is in an assembled and ready-to-use state, the uppermost portion of the lower edge of the sleeve defines the instantaneous limit level. The significantly reduced area potentially allowing a depositing of lime etc. has the effect that a reduced force is necessary for a setting. Moreover, the entire problematics concerning the gasket has been eliminated as the adjustable riser pipe according to the invention does not include a gasket.

Any structure member of the adjustable riser pipe according to the invention can stop in the upward direction substantially on a level with the bottom of the upper container.

As a result, the filter, optionally a disposable filter, in the upper container need not be annular, it can be plane or cup-shaped with the result that it is very inexpensive and easy to handle.

On the outer side, the adjustable main pipe can be of a circular cross section at the sleeve. Such a simple geometry implies that it is easy to provide a seal about the sleeve.

During the setting movement, the sleeve can be guided in a helical path about the main pipe. As a result unambiguousness is obtained, viz. the exchange is a long peripheral movement along the circumference, i.e. a short axial movement.

The helical path is preferably defined by an axial, helically extending groove in the cylindrical surface of the main pipe at the sleeve and by a structure member projecting from the inner side of the sleeve and engaging said groove.

Locally, the contact surfaces of the projecting structure member are worn more than the contact surfaces of the groove, and accordingly an advantage is obtained because the wear applies to the sleeve which is the smallest and most inexpensive member of the two members of the riser pipe, said sleeve further being the easiest member to replace.

The engaging structure member projecting from the inner face of the sleeve is preferably arranged on an integrated, flexible web of the sleeve. As a result, a sleeve is obtained which is easy to remove/mount for instance in connection with a cleaning. The spring tension suffices for a "clicking in"-procedure.

Locally, the groove can present an increased depth with the result that indexing points arise, and the projecting structure member of the sleeve can "be catched in" said indexing points in a clearly perceptible manner. As a result, the setting can be maintained in the "caught" point. In addition to the above advantages it is also possible to include a "perceived/heard" setting in the dark.

The indication of the settings is preferably in form of a ruler with the individual settings positioned opposite the upper rim of the sleeve, said reference point on the main pipe being axially indicated on the circumferential outer side of the main pipe. As a result, the exchange fine setting is related to the pitch of the "thread".

The upper rim of the sleeve with the individual settings can follow the pitch of the helical groove. As a result, the reference point of the main pipe can be an outwardly projecting tip opposite the ruler as the rim of the sleeve need not move away from or towards said tip during one rotation.

The setting points are preferably. in form of a profiling of the material surface of the sleeve and/or the main pipe. The resulting advantages are inter alia that the production of the articles has been simplified and rendered possible at a low price because the setting points can for instance be directly cast therein when the production material is plastics.

The setting points can be provided by arranging a material with a colour/light effect clearly differing from the material of the sleeve and/or the main pipe, respectively. The resulting setting points are very easy to see due to the improved contrast. Such arrangements of the materials with a differing colour can for instance be carried out by way of a double shot injection moulding.

The lower portion of the sleeve surrounds preferably the main pipe through the properties of the material used, viz. the resilient and sealing properties. The advantages of the resultingly provided resilient seal is that the sealing portions of the sleeve with smooth soft surfaces do not pass the groove and accordingly they are not damaged by said groove.

The helical movement between the sleeve and the main pipe can be limited by physical stops in form of projecting portions and/or edges/surfaces and/or recesses capable of engaging one another.

The sleeve and/or the main pipe can advantageously be partially provided with a surface profiling/structure/texture ensuring a good hold. The resulting advantages are both an improved hold on the components and that it is ensured that the sleeve is not unintentionally pushed/screwed/pulled off the main pipe.

### Brief Description of the Drawings

The invention is explained in greater detail below by means of a specific embodiment, which is not to be considered limiting the invention because the entire scope of the invention appears from the claims. Below reference is made to the accompanying drawing of the embodiment, in which
Fig. 1 is a perspective, inclining top view of the upper container for a device of the relevant type for brewing coffee/tea and with an embodiment of a main pipe according to the invention,
Fig. 2 is a perspective inclining bottom view of an embodiment of a sleeve according to the invention,
Fig. 3 is a sectional view of the sleeve of Fig. 2 cut diametrically through the central, long setting point on the scale in such a manner that the long slot to the left of Fig. 1 appears from the interior of said sleeve,
Fig. 4 is a perspective top view of an embodiment of the adjustable riser pipe according to the invention, said view showing the lower portion of the upper container with the main pipe of Fig. 1 and where the sleeve of Fig. 2 is mounted on said main pipe and set in a central position, and
Fig. 5 is a side view of a diametric cross section through the embodiment on the adjustable riser pipe according to the invention on an upper container, where said riser pipe does not project beyond the bottom of said container, cf. Figs. 1 and 4.

### Best Mode for Carrying out the Invention

### Description of an illustrating embodiment.

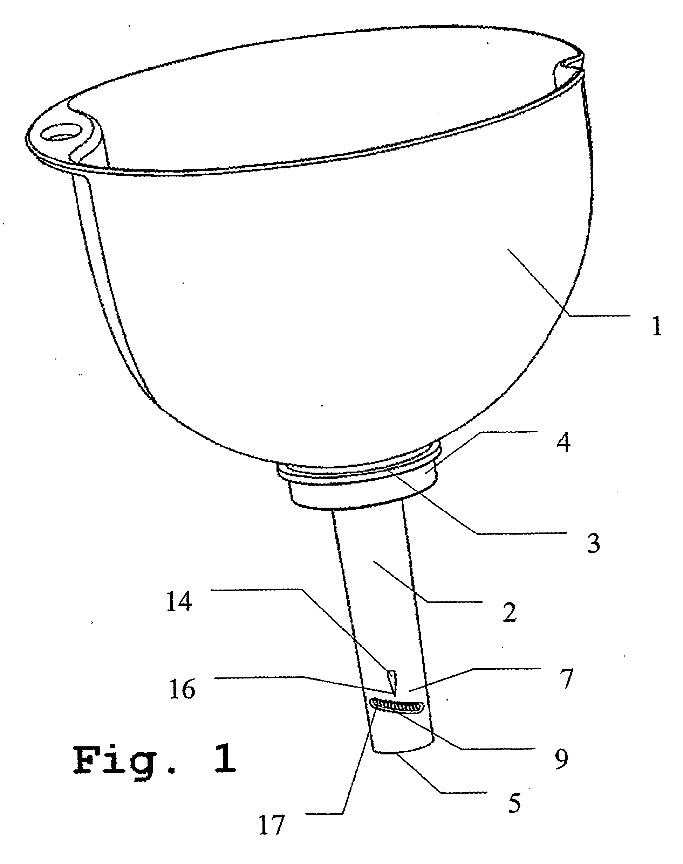

Fig. 1 shows the upper container 1 for an device of a relevant type for brewing coffee/tea and with an embodiment of a main pipe 2 according to the invention. In this embodiment, the seal between the upper container 1 and the lower container not shown of the device is provided in such a manner that the main pipe 2 of the riser pipe extends downwards into the otherwise closed lower container with water when the device is in the assembled and ready-to-use state for a brewing. As mentioned above, the general brewing function of the device is not described in greater detail here. However, it should be noted that during the brewing procedure the water is pressed by the steam pressure caused by the heating upwards through the riser pipe and into the upper container 1 until the water level in the lower container reaches the effective lower limit of the riser pipe. Subsequently, substantially steam rises through the riser pipe during the remaining heating.

The main pipe 2 of the invention is fixedly and tightly connected to the structure 4 of the upper container 1 in such a manner that the lower edge 5 of the main pipe 2 is arranged at a fixed distance and position relative to said structure 4, and furthermore in such a manner that said lower edge 5 is always on the same level relative to a ref erence point in the lower container, such as the bottom of said lower container in the assembled and ready-to-use state of the device. Although any other suited combination of known materials can, of course, be used, the material for the main pipe 2 and the upper container 1 is preferably suitably made of especially temperature-resistant thermoplast in such a manner that said members can be injection moulded as an integrated unit, where said unit can simultaneously also include sealing and securing details at 3.

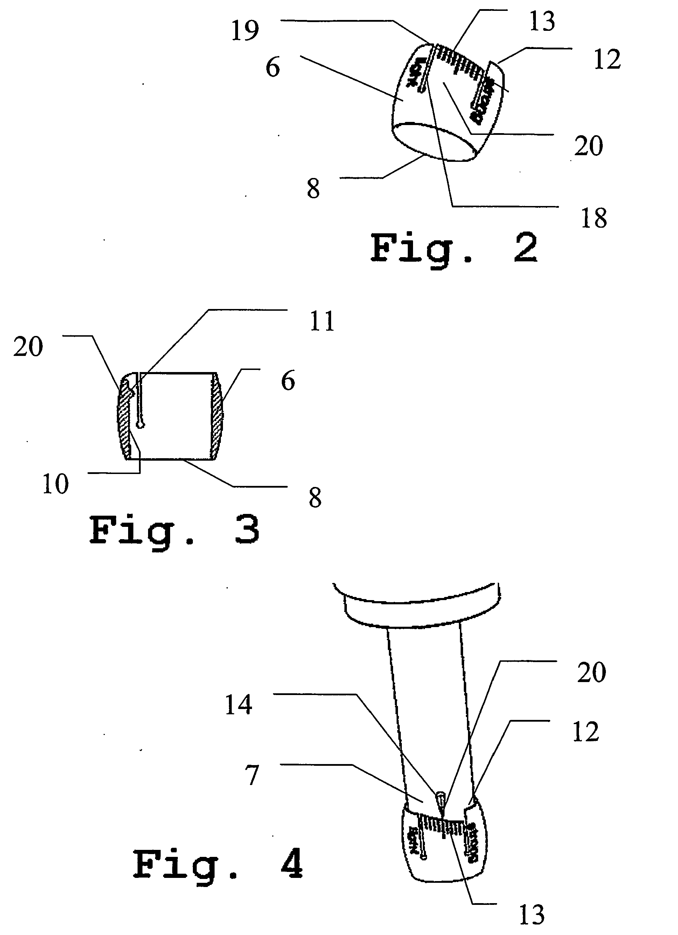

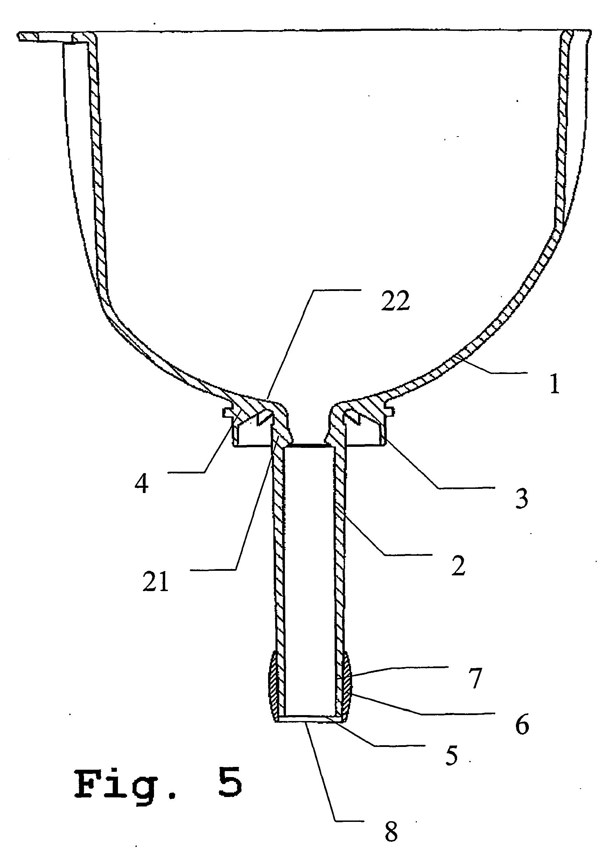

Fig. 2 is a perspective view of the sleeve 6 of the invention for the adjustable riser pipe 7 of the invention, and in Fig. 3 said sleeve is cut through. In both Figures the lower redge 8 of the sleeve is placed at the bottom. Here the sleeve 6 is in general formed as a relatively short length of pipe, and it is advantageously made of a suitable resilient material, such as a material of the thermoplast type. In order to provide an adjustable riser pipe 7 according to the invention, the sleeve 6 is arranged about the lower portion of the main pipe 2 in such a manner that the lower edge 8 of said sleeve 6 is positioned lower than the fixed bottom edge 5 of the main pipe 2, said lower edge 5 being cut through in Fig. 5. The sleeve 6 seals about the main pipe 2, and accordingly the main pipe 2 can advantageously be provided with an even and relatively smooth cylindrical outer side. As a result the movement of the sleeve 6 on the main pipe 2 has also been facilitated. During this movement, it is possible to change the distance between the lower edge 8 of the sleeve and the lower edge 5 of the main pipe 2. Thus the setting of the adjustable riser pipe 7 of the invention is carried out by setting a specific interspace between the edges 5 and 8 through a movement of the sleeve 6 on the main pipe 2, the sealing between said sleeve 6 and the main pipe 2 implying that the effective lower edge of the riser pipe is defined by the lower edge 8 of said sleeve 6.

As the contact area of the sleeve is relatively small at the main pipe, the problems of possible lime deposits are minimum. Accordingly, only a weak force is always necessary for the user to set the position of the sleeve on the main pipe.

As the main pipe 2 is substantially circular-cylindrical at the lower end with the adjustable sleeve 6, it is natural to perform the setting movement of the sleeve as a combined turning and displacement of said sleeve on the main pipe. Then the setting can advantageously be an improved single-valued function by guiding the movement of the sleeve along an optionally helical line. The latter is carried out here by a portion of an axially helical groove 9, cf. Fig. 1, for instance being cast integral with the main pipe 2, and by a projecting structure member, cf. Fig. 3, being provided on the inner side of the sleeve 6. When the sleeve is positioned on the main pipe with a poor clearance, the above projecting structure member can engage the helical groove 9 and thereby guide said sleeve within a desired angular range during the turning movement while the engagement can simultaneously define a substantially unambiguous axial position of the lower edge of the sleeve at a predetermined angular position.

In order to allow an easily reproducable adjustment of the distance of for instance the lower edge 8 of the sleeve 6 from the lower edge 5 of the main pipe 8, the sleeve is here provided with setting points on the outer side at its upper edge 12. These setting points are in form of a ruler-like scale 13 with graduations, where the main pipe 2 is provided with a corresponding reference point 14. The reference point 14 can for instance be an axially extending indication of a line on the surface below the scale 14 of the sleeve when the latter is correctly mounted through the helical groove engagement.

The upper edge of the sleeve can opposite the setting points 13 be obliquely cut at 15, cf. especially Fig. 2 along the helical line described by the mounted sleeve 6 on the main pipe 2 during the setting, cf. Figs. 2 and 4. As a result, it is possible to narrow the reference point 14 on the main pipe 2 down to a fixed reference point, which for instance can be represented by the tip of an arrow indication 16 cast thereon.

In addition to the actual scale graduations 15 to be used together with the reference point 14, it is possible for instance on the sleeve also to place supplementing guidance symbols etc. These guidance symbols can for instance be placed like the ones without reference numerals indicated at the ends of the scale in Figs. 2 and 4.

The setting points, the reference points and the like points can together with a possible partially particular surface structure be provided preferably during the injection moulding of the sleeve/the main pipe. The partially particular surface structure can be provided for improving the hold of the user onto a perhaps otherwise smooth wet/moist/greasy surface on the sleeve/the main pipe.

The use of the setting points can be facilitated also in dark surroundings when they present a distinct light/colour contrast to the surrounding portions. Therefore, colour points can be used, such as white lines printed on a black base material. It is possible to ensure a very wear-resisting and permanent indication of the setting points by means of a double-effect injection moulding where for instance a white marking material is injection-moulded into cavities by a combined process, said cavities exactly being caused by the injection moulding of the primary structure of the article of a for instance black base material. Such an indication of the setting points can meet to a high degree the high hygiene requirements.

For instance visually handicapped users can also be helped in connection with the setting of the riser pipe by said setting being made perceptible and/or audible. Inter alia for this purpose, the helical groove 9 on the main pipe 2 can present a locally increased groove depth 17 in such a manner that during the setting movement the internally projecting, engaging structure member 11 of the sleeve 6 clicks in a perceptible and/or audible manner between the various depths of the groove. Particular "click"-positions can be provided for instance at positions such as "1/4", "1/2" and "3/4" or the like whereby the positions "0" and "1/1" then can be the natural, easily recognizable end/stop positions in the helical groove. As a result, increased requirements are presented to the resilience of the structure member 11, where said resilience is ordinarily ensured by means of the resilience of the sleeve material per se. The structure member 11 can advantageously be arranged on an integrated spring web 20 provided between and by means of two preferably axial slots 18, 19 placed in the sleeve 6 at a distance from the upper edge 12 thereof.

When the helical portion 15 of the upper edge 12 on the sleeve 6 with the setting points 13 has been pulled downwards relative to for instance the opposite sides of the slots as shown at 20 in Fig. 2, it is possible to provide reliable permanent stops in end positions at the projecting sides of the slots, said projecting sides of the slots at 19 for instance abutting an arrow setting point 16, cf. Fig. 4, also shaped as a stop button.

Inter alia in connection with all these features at the upper edge of the sleeve and at a portion of the main pipe, it is advantageous when the seal between the sleeve 6 and the main pipe 2 is provided at or immediately above the lower edge of the main pipe because then the sealing members on the sleeve need not pass for instance sharp edges/grooves etc. during the mounting procedure before they are sealingly positioned. When the seal is placed at the lower edge 5 of the main pipe 2, said lower edge can automatically push deposited lime away during the setting movement and thereby ensure that the seal is self cleaning.

Keeping all the above explanations in mind, the function and advantages of the adjustable riser pipe 7 according to the invention are completely obvious from Fig. 5. It appears directly from Fig. 5 that the set limit level for the pressing of water upwards into the upper container 1 during the brewing in the device is defined by means of the length of the riser pipe 7. The latter length of the riser pipe 7 is defined by the lower edge 8 of the sleeve 6 and extends from a fixed reference point in the upper container 1.

It appears from the sectional view of Fig. 5 that the riser pipe 7 according to the invention can be shaped in such a manner that no portion of the main pipe 2 and consequently of the structure 21 of said riser pipe project above the bottom 22 of the upper container 1 with the result that a simple and inexpensive cup-like coffee/tea filter can be used, said filter being provided with a substantially plane bottom without a central collar forming about a through structure.

As mentioned above, the above matter presents nothing but an illustrating example of an embodiment of the adjustable riser pipe according to the invention. This example should in no way be considered limiting for the invention, the entire scope thereof appearing from the following claims.

## Claims

1. Adjustable riser pipe in a device for brewing coffee, tea or the like
- said device including two containers sealingly arranged relative to and above one another, where the two containers are flow-connected through the adjustable riser pipe in such a manner that liquid water can be caused to leave the closed lower container and enter the upper container through said riser pipe by means of pressure resulting from a heating until the rising of liquid water is stopped because the water level reaches a limit level defined by a level set by the lower edge of the riser pipe, optionally according to a set of marking points,
**characterised in,**
- **that** the riser pipe (7) is formed by a main pipe (2) and a sleeve (6) being substantially sealingly and axially and/or circumferentially displaceable about said main pipe,
- **that** the main pipe (2) fixedly and tightly abuts a structure (4) in the upper container (1),
- **that** the main pipe (2) includes a lower edge (5) at an unchangeable distance and direction from a fixed reference point on the upper container,
- **that** the adjustable length of the riser pipe and consequently the set limit for the rising liquid water from the lower container during the brewing procedure are defined by the instantaneous maximum level of the lower edge (8) of the sleeve (6).

2. Adjustable riser pipe according to claim 1, **characterised in that** in the upward direction any structure member (2, 6) from the adjustable riser pipe stops substantially on a level with the bottom (22) of the upper container.

3. Adjustable riser pipe according to one or more of the above claims, **characterised in that** the main pipe (2) on the outer side at the sleeve (6) presents a circular cross section and a relatively smooth surface.

4. Adjustable riser pipe according to one or more of the above claims, **characterised in that** during the setting movement the sleeve (6) is guided in a helical path about the main pipe (2).

5. Adjustable riser pipe according to claim 4, **characterised in that** the helical path is defined by an axially extending helical groove (9) in the cylindrical surface of the main pipe (2) at the sleeve (6) and by a structure member (11) projecting from the inner side (10) of the sleeve (6) and engaging said cylindrical surface of the main pipe (2).

6. Adjustable riser pipe according to claim 5, **characterised in that** the engaging structure member (11) projecting from the inner side of the sleeve is positioned on an integrated resilient web (20) of the sleeve (6).

7. Adjustable riser pipe according to claim 5 or 6, **characterised in that** locally the groove (9) presents an increased depth (17).

8. Adjustable riser pipe according to one or more of the above claims, **characterised in that** the indication of the settings is formed as a ruler (13) with setting points arranged at the upper rim (12) of the sleeve, a reference point (14) on the main pipe (2) appears axially on the circumferential outer side of the main pipe.

9. Adjustable riser pipe according to claims 5 and 8, **characterised in that** the upper edge (12) of the sleeve (6) with the setting points (13) follows the pitch of the helical groove (9).

10. Adjustable riser pipe according to one or more of the above claims, **characterised in that** the setting points (13, 14) result from a profiling of the material surface of the sleeve (6) and/or the main pipe (2).

11. Adjustable riser pipe according to one or more of the above claims, **characterised in that** the setting points are provided by means of a material with a colour/light effect clearly differing from the main material ingredient of the sleeve and/or the main pipe, respectively.

12. Adjustable riser pipe according to one or more of the above claims, **characterised in that** the lower portion of the sleeve (6) resiliently and sealingly surrounds the main pipe (2) due to the properties of the material used. '

13. Adjustable riser pipe according to one or more of the claims 4 to 12, **characterised in that** the helical movement between the sleeve (6) and the main pipe (2) is limited by physical stops in form of projecting portions (11, 16) and/or edges (19)/surfaces and/or recesses (9) which can engage one another.

14. Adjustable riser pipe according to one or more of the above claims, **characterised in that** the outer side of the sleeve (6) and/or the main pipe (2)/the upper container (1) is optionally partially provided with a hold-ensuring surface profiling/structure/texture.

## Patentansprüche

1. Einstellbare Steigleitung in einer Zubereitungseinrichtung für Kaffee, Tee oder dergleichen, wobei diese Einrichtung zwei Behälter umfasst, die übereinander angeordnet und miteinander dicht verbunden sind, wobei die zwei Behälter derart über die einstellbare Steigleitung durchflussmäßig verbunden sind, dass flüssiges Wasser den geschlossenen unteren Behälter verlässt und in den oberen Behälter über die Steigleitung durch Druckmittel gelangen kann, wobei der Druck durch Erhitzung solange erzeugt wird, bis der Anstieg des flüssigen Wassers gestoppt wird, da der Wasserstand eine Grenzhöhe erreicht, die durch eine Höheneinstellung durch die untere Verbindung der Steigleitung festgelegt ist, wahlweise gemäß einer Gruppe von Markierungspunkten,
**dadurch gekennzeichnet,**
- **dass** die Steigleitung (7) von einer Hauptleitung (2) und einer Manschette (6) gebildet wird, die im Wesentlichen dicht und axial und/oder umfänglich um die Hauptleitung verschiebbar ist,
- **dass** die Hauptleitung (2) fest und dicht an einem Aufbau (4) in dem oberen Behälter (1) angrenzt,
- **dass** die Hauptleitung (2) eine untere Verbindung (5) in einem unveränderlichen Abstand von einem festen Referenzpunkt am oberen Behälter umfasst,
- **dass** die einstellbare Länge der Steigleitung und folglich die Einstellungsgrenze für den Anstieg des flüssigen Wassers vom unteren Behälter während der Zubereitungsprozedur durch die unmittelbare maximale Höhe der unteren Verbindung der Manschette (6) festgelegt ist.

2. Einstellbare Steigleitung nach Anspruch 1, **dadurch gekennzeichnet, dass** jedesd Bauteil (2, 6) von der einstellbaren Steigleitung in die Aufwärtsrichtung im Wesentlichen auf einer Höhe mit dem Boden (22) des oberen Behälters stoppt.

3. Einstellbare Steigleitung nach einem oder mehreren der vorhergehenden Ansprüche, **dadurch gekennzeichnet, dass** die Hauptleitung (2) an der äußeren Seite an der Manschette (6) einen kreisförmigen Querschnitt und eine relativ glatte Oberfläche aufweist.

4. Einstellbare Steigleitung nach einem oder mehreren der vorhergehenden Ansprüche, **dadurch gekennzeichnet, dass** während des Einstellungsvorgangs die Manschette (6) auf einer schraubenförmigen Bahn um die Hauptleitung (2) geführt wird.

5. Einstellbare Steigleitung nach Anspruch 4, **dadurch gekennzeichnet, dass** die schraubenförmige Bahn durch eine sich axial erstreckende schraubenförmige Rille (9) in der zylindrischen Oberfläche der Hauptleitung (2) an der Manschette (6) und durch ein Bauteil (11) gebildet wird, das an der inneren Seite (10) der Manschette (6) herausragt und die zylindrische Oberfläche der Hauptleitung (2) greift.

6. Einstellbare Steigleitung nach Anspruch 5, **dadurch gekennzeichnet, dass** das von der inneren Seite der Manschette herausragende greifende Bauteil (11) an einem integrierten elastischen Gewebe (20) der Manschette (6) angeordnet ist.

7. Einstellbare Steigleitung nach Anspruch 5 oder 6, **dadurch gekennzeichnet, dass** die Rille (9) lokal eine zunehmende Tiefe (17) aufweist.

8. Einstellbare Steigleitung nach einem oder mehreren der vorhergehenden Ansprüche, **dadurch gekennzeichnet, dass** die Einstellungen durch ein Lineal (13) mit am oberen Rand (12) der Manschette angeordneten Einstellungspunkten angezeigt wird, wobei ein Referenzpunkt (14) axial an der kreisförmigen äußeren Seite der Hauptleitung erscheint.

9. Einstellbare Steigleitung nach Anspruch 5 und 8, **dadurch gekennzeichnet, dass** die obere Kante (12) der Manschette mit den Einstellungspunkten (13) der Steigung der schraubenförmigen Rille (9) folgt.

10. Einstellbare Steigleitung nach einem oder mehreren der vorhergehenden Ansprüche, **dadurch gekennzeichnet, dass** die Einstellungspunkte (13, 14) sich aus einem Profilschleifen der Materialoberfläche der Manschette (6) und/oder der Hauptleitung (2) ergeben.

11. Einstellbare Steigleitung nach einem oder mehreren der vorhergehenden Ansprüche, **dadurch gekennzeichnet, dass** die Einstellungspunkte mit Hilfe eines Materials mit einem Farb-/ Lichteffekt zur Verfügung gestellt werden, das sich deutlich vom Hauptbestandteil des Materials der Manschette und/oder der Hauptleitung unterscheidet.

12. Einstellbare Steigleitung nach einem oder mehreren der vorhergehenden Ansprüche, **dadurch gekennzeichnet, dass** der untere Abschnitt der Manschette (6) elastisch und dicht die Hauptleitung (2) aufgrund der Eigenschaften des verwendeten Materials umgibt.

13. Einstellbare Steigleitung nach einem oder mehreren der Ansprüche 4 bis 12, **dadurch gekennzeichnet, dass** die schraubenförmige Bewegung zwischen der Manschette (6) und der Hauptleitung (2) durch Anschläge in Form von verlängerten Abschnitten (11, 16) und/oder Kanten (19)/Oberflächen und/oder Vertiefungen (9), die einander greifen können, begrenzt wird.

14. Einstellbare Steigleitung nach einem oder mehreren der vorhergehenden Ansprüche, **dadurch gekennzeichnet, dass** die äußere Seite der Manschette (6) und/oder die Hauptleitung (2)/der obere Behälter (1) teilweise mit einer haltsicheren Oberflächenform/-struktur wahlweise versehen ist.

## Revendications

1. Colonne montante réglable dans un dispositif d'infusion de café, de thé ou analogue,
- ledit dispositif comprenant deux récipients disposés dans une relation étanche l'un au-dessus de l'autre, les deux récipients étant reliés pour permettre un écoulement par l'intermédiaire de la colonne montante réglable de façon que de l'eau sous forme liquide puisse être amenée à quitter le récipient inférieur fermé et à entrer dans le récipient supérieur par l'intermédiaire de ladite colonne montante à l'aide d'une pression résultant d'un chauffage jusqu'à ce que la montée de l'eau sous forme liquide soit arrêtée du fait que le niveau de l'eau atteint un niveau limite défini par un niveau déterminé par le bord inférieur de la colonne montante, facultativement en fonction d'un ensemble de points de repère,
**caractérisée en ce que**
- la colonne montante (7) est constituée d'un tuyau principal (2) et d'un manchon (6) déplaçable axialement et/ou circonférentiellement de manière sensiblement étanche autour dudit tuyau principal,
- le tuyau principal (2) aboutit de manière fixe et intime à une structure (4) du récipient supérieur (1),
- le tuyau principal (2) comprend un bord inférieur (5) situé à une distance et dans une direction invariables par rapport à un point de référence fixe du récipient supérieur,
- la longueur réglable de la colonne montante et par conséquent la limite déterminée pour l'eau sous forme liquide montant à partir du récipient inférieur pendant le processus d'infusion sont définies par le niveau maximum instantané du bord inférieur (8) du manchon (6).

2. Colonne montante réglable selon la revendication 1, **caractérisée en ce que** dans la direction ascendante, tout élément de structure (2, 6) de la colonne montante réglable s'arrête sensiblement au niveau du fond (22) du récipient supérieur.

3. Colonne montante réglable selon une ou plusieurs des revendications ci-dessus, **caractérisée en ce que** le tuyau principal (2) présente une section transversale circulaire et une surface relativement lisse sur sa face extérieure au niveau du manchon (6).

4. Colonne montante réglable selon une ou plusieurs des revendications ci-dessus, **caractérisée en ce que** le manchon (6) est guidé suivant une trajectoire hélicoïdale autour du tuyau principal (2) pendant son mouvement de réglage.

5. Colonne montante réglable selon la revendication 4, **caractérisée en ce que** la trajectoire hélicoïdale est définie par une rainure hélicoïdale (9) s'étendant axialement dans la surface cylindrique du tuyau principal (2), au niveau du manchon (6), et par un élément de structure (11) faisant saillie sur la face intérieure (10) du manchon (6) et venant en contact avec ladite surface cylindrique du tuyau principal (2).

6. Colonne montante réglable selon la revendication 5, **caractérisée en ce que** l'élément de structure de contact (11) faisant saillie sur la face intérieure du manchon est positionné sur une languette élastique (20) solidaire du manchon (6).

7. Colonne montante réglable selon la revendication 5 ou 6, **caractérisée en ce que** la rainure (9) présente localement une profondeur (17) plus grande.

8. Colonne montante réglable selon une ou plusieurs des revendications ci-dessus, **caractérisée en ce que** l'indication des réglages se présente sous la forme d'une règle (13) comportant des points de réglage disposés sur la bordure supérieure (12) du manchon, un point de référence (14) sur le tuyau principal (2) apparaîssant axialement sur la face circonférentielle extérieure de celui-ci.

9. Colonne montante réglable selon les revendications 5 et 8, **caractérisée en ce que** le bord supérieur (12) du manchon (6) comportant les points de réglage (13) suit le pas de la rainure hélicoïdale (9).

10. Colonne montante réglable selon une ou plusieurs des revendications ci-dessus, **caractérisée en ce que** les points de réglage (13, 14) sont le résultat d'un profilage de la surface de matériau du manchon (6) et/ou du tuyau principal (2).

11. Colonne montante réglable selon une ou plusieurs des revendications ci-dessus, **caractérisée en ce que** les points de réglage sont réalisés à l'aide d'une matière ayant un effet coloré / lumineux qui diffère clairement de l'ingrédient de la matière principale, respectivement du manchon et/ou du tuyau principal.

12. Colonne montante réglable selon une ou plusieurs des revendications ci-dessus, **caractérisée en ce que** la partie inférieure du manchon (6) entoure le tuyau principal (2) de manière élastique et étanche grâce aux propriétés de la matière utilisée.

13. Colonne montante réglable selon une ou plusieurs des revendications 4 à 12, **caractérisée en ce que** le mouvement hélicoïdal entre le manchon (6) et le tuyau principal (2) est limité par des butées physiques sous la forme de parties saillantes (11, 16) et/ou de bords (19) / surfaces et/ou d'évidements (9) pouvant venir en contact les uns avec les autres.

14. Colonne montante réglable selon une ou plusieurs des revendications ci-dessus, **caractérisée en ce que** la face extérieure du manchon (6) et/ou du tuyau principal (2) / récipient supérieur (1) est facultativement munie partiellement d'un profil / d'une structure / texture de surface permettant la préhension.
